# EUROPEAN PATENT SPECIFICATION

(11) **EP 1 290 318 B1**
(45) Date of publication and mention of the grant of the patent: **22.02.2006**
(21) Application number: 01938398.3
(22) Date of filing: 13.06.2001
(51) Int. Cl.: F01N 3/20

(54) **REACTOR FOR TREATING EXHAUST GAS**
REAKTOR ZUR ABGASBEHANDLUNG
REACTEUR DESTINE A TRAITER DES GAZ D'ECHAPPEMENT

(30) Priority: 16.06.2000 GB 0014620
(43) Date of publication of application: 12.03.2003
(73) Proprietor: JOHNSON MATTHEY PUBLIC LIMITED COMPANY, London SW1Y 5BQ (GB)
(72) Inventor: CHAPMAN, Kenneth, Hazel, Co Durham DL3 8AW (GB); WILKINS, Anthony, John, Joseph, Essex CB11 3HW (GB)
(74) Representative: Nunn, Andrew Dominic
(86) International application number: PCT/GB2001/002565
(87) International publication number: WO 2001/096717

(56) References cited:
- EP-A- 0 924 400
- DE-A- 19 855 093
- US-A- 4 175 107

## Description

The present invention relates to a reactor for treating an exhaust gas, which reactor comprising at least one first zone and a second zone downstream of the or each first zone, the or each first zone and optionally the second zone including a chemically active coating or a catalytically active coating, and to an exhaust system including the reactor.

An exhaust system for treating an exhaust gas, e.g. from a diesel engine, can include a number of distinct catalysts, each for catalysing a particular reaction. Certain reactions require a reactant, e.g. a reductant such as a hydrocarbon, to be introduced into the exhaust gas upstream of a catalyst to improve the efficiency of the catalysed reaction A number of methods of introducing reactants into an exhaust system are known. For example, providing an injector part way along the exhaust treatment system, disposing a catalyst on a separate substrate, or providing the injector part way along a substrate housing or "can" between catalysts "zones". These known solutions can be complex and expensive and there may be limited space available in the underftoor position of a vehicle to accommodate more than one substrate housing or "can". However, if the reactant has to pass over one or more catalysts upstream of the target catalyst, it may undergo unwanted reaction before it reaches the target catalyst. This can be wasteful of reactant and it can prevent the efficient catalysis of the desired reaction over the target catalyst.

An example of the above problem that can arise in practice is in a process including that described in EP-A-0341932 or US-A-4,902,487. The process comprises passing diesel exhaust gas including soot and NO unfiltered over an oxidation catalyst to convert NO to NO₂, collecting the soot on a filter and combusting the collected soot by reaction with the NO₂. This technology is commercially available as Johnson Matthey's Continuously Regenerating Trap or CRT™. Further steps may be added, for example downstream NOx removal by injection of reductant or NOx-specific reactant (see for example our WO-A-00/21647).

Another example arises in the process described in WO-A-99/39809, which comprises passing exhaust gas over an oxidation catalyst to convert at least part of the NO present to NO₂, then reacting the NO and the NO₂ with ammonia to produce N₂. A soot filter can be provided between the oxidation catalyst and the catalyst for catalysing the reduction of the NOx to N₂.

We have now discovered a way of substantially preventing reaction of a reactant over one or more catalyst(s) so that the reactant can reach a target catalyst downstream such that standard substrates can be used, i.e. complex or expensive substrate construction is avoided.

According to one aspect, the invention provides a reactor for treating an exhaust gas, which reactor comprising at least one first zone and a second zone downstream of the or each first zone, the or each first zone and optionally the second zone including a chemically active coating or a catalytically active coating, characterised in that the or each first zone includes a region substantially free of active coating, whereby a reactant flowing over the region can pass thereover substantially without reacting so that the reactant can reach the second zone.

The reactor can be incorporated into an exhaust system including a means for supplying a reactant to the reactor.

According to another aspect, the invention provides an exhaust system comprising a reactor for treating an exhaust gas, which reactor comprising at least one first zone and a second zone downstream of the or each first zone, the or each first zone and optionally the second zone including a chemically active coating or a catalytically active coating and means for supplying a reactant to the exhaust system upstream of the or each first zone, the arrangement being such that the supply means substantially prevents access of the exhaust gas to a region of the or each first zone whereby a reactant introduced into the region via the supply means can pass through the zone to reach the second zone.

Preferably, the second zone includes a chemically or catalytically active coating.

The reactor when used for lean-burn or diesel exhaust gas treatment may provide or be part of a system comprising combinations of:
(a) an oxidation catalyst;
(b) a soot filter;
(c) a NOx absorbent or SCR catalyst; and
(d) a NOx reduction section e.g. a 2- or 3-way catalyst.

In preferred embodiments the reactor comprises, from upstream to downstream, features a+b, b+c, b+c+d or a+b+c+d. A particularly preferred arrangement, especially suitable for diesel engine exhaust gas, comprises a+b using a single honeycomb unit (brick), followed by c and/or d supported on separate honeycomb substrates, preferably disposed in a single can, with a reactant supply means upstream of (a).

The zones can each be either distinct zones within a single substrate monolith or "brick", or they may comprise one or more substrates which can be arranged cassette-like in a container or "can" such that gaseous communication between substrates is maintained, e.g. by aligning passages or choosing substrates of similar cell density. Where a "can" is used, it can further include inlet and outlet ports and a conduit for injecting a reactant upstream of the first zone.

In each zone the substrate for the active coating is suitably rigid and is preferably a through-flow honeycomb monolith as is commonly used in exhaust gas treatment or a filter such as a wall-flow filter. Other types of structural element may be used, including in particular those termed a "static mixer", the surfaces of which may carry catalytic coatings, absorbents or other reactive components.

In preferred embodiments, the second zone comprises a NOx absorber or a catalyst for selective catalytic reduction of NOx using a nitrogen hydride, preferably ammonia or hydrazine, as reactant.

Generally, the active coating can be applied to a substrate in a washcoat including a high surface area oxide such as alumina, ceria, titania, zirconia, silica, a zeolite or a mixture or mixed oxide of any two or more thereof. Modes of coating a substrate are known to the person skilled in the art and no further details will be given herein. However, the following methods of providing a region substantially free of active coating according to the invention are provided by way of illustration. If the zone is catalytically active, the region can be provided for example by:
(a) applying catalytic material to only part of the substrate. Thus, if the substrate is a honeycomb monolith, catalyst can be applied by incompletely immersing the monolith in a catalyst solution transversely, i.e. with its through passages lying substantially horizontally relative to the surface of the solution. This provides catalyst-free honeycomb monolith for example in a region segmental in cross-section if 7/8ths of the monolith is immersed; or in an axial region of e.g. circular or oval cross-section if the monolith is immersed to less than the radius of the monolith and is rotated along an axis of the monolith passages during immersion;
(b) applying a resist such as wax or a long chain fatty acid or inserting a pair of removable stoppers to the part of the honeycomb that is to be catalyst free; then applying a catalyst e.g. as a solution, such as by complete immersion of the monolith or by spraying or relative movement of the monolith to a flowing washcoat; and
(c) applying catalyst to the whole honeycomb monolith, then removing it from, or poisoning it in, the region intended to be catalyst-free. If the honeycomb carries a washcoat as a support for active catalyst, this may be omitted in the region intended to be relatively inactive. As a result, the passages of the honeycomb in the region are more open to gas flow and/or there is less catalyst loaded onto the passages that lack washcoat and/or the significantly lower surface area of said region yields a less active catalyst.

If the or each first zone comprises an absorption/desorption zone (e.g. a NOx-trap for NOx or a zeolite adsorber for unburnt or partially burnt hydrocarbons), substantially the same methods described above can be used to apply active coatings and provide a region substantially free of active coating.

The or each first zone preferably comprises an oxidation catalyst and a downstream soot filter.

In a preferred embodiment, the reactor comprises a second zone including a NOx absorber or a catalyst for the selective catalytic reduction of a NOx using a nitrogen hydride, preferably ammonia or hydrazine, as reactant (hereinafter SCR catalyst) with at least one first zone upstream thereof, which at least one first zone preferably comprises an oxidation catalyst Where the reactor is incorporated into an exhaust system, the reactant to be supplied, e.g. by injection, is a reductant, such as a hydrocarbon, or a NOx-specific reactant, e.g. a nitrogen hydride preferably ammonia or hydrazine, which, having entered the reactor via the region of the or each first zone substantially free of active coating, reaches the absorber or SCR catalyst with little if any loss and reacts over it or regenerates it, as appropriate. Such a reactor preferably includes also a soot filter between the oxidation catalyst and the NOx absorber or SCR catalyst. The soot filter in such a reactor is preferably catalyst-free or comprises a relatively weak catalyst.

If the or each first zone comprises a multi-part oxidation catalyst, for example with distinct hydrocarbon oxidation and NO-oxidation parts or sections and/or including a part formulated to promote oxidation of 'wet soot', as described in-WO 00/34632, each part has a substantially catalyst-free region, and the parts are assembled into the reactor with those regions in mutual alignment. This can be conveniently arranged by using a single honeycomb monolith (or "brick") having distinct catalyst formulations serially disposed along its length.

In a further embodiment, the or each first zone comprises a catalysed soot filter and the second zone comprises a NOx absorber or a SCR catalyst, i.e. there is no oxidation catalyst upstream of the filter. However, the exhaust system may further include an oxidation catalyst not being part of the reactor according to the invention, e.g. in the close-coupled position, i.e. immediately downstream of an engine exhaust manifold. Thus the reactant-supply means is immediately upstream of the filter, a region of the filter is substantially free of active coating or the supply means is aligned, e.g. axially, with the region such that the supply means substantially prevents access of the exhaust gas to a region of the filter whereby the reactant introduced into the region via the supply means can pass through the filter to reach the second zone downstream without mixing with exhaust gas components. The filter region substantially free of active coating can be provided by methods analogous to those described for catalytic and absorptive zones (a), (b) and (c) above.

The honeycomb monolith to be used in the reactor may be made structurally of ceramic, for example cordierite, alumina, mullite, silicon carbide, zirconia or sodium/zirconia/phosphate, or metal, for example thermally resistant alloy such as Fecraloy™. The monolith has typically at least 50 cells per square inch, possibly more, e.g. up to 1000 if ceramic, or e.g. up to 1200 if metal. Generally the range 100-900 is presently preferred.

For catalysts and NOx absorbers, the walls of the honeycomb monolith are substantially gas-impermeable and preferably the washcoat comprises a high surface area support suitably comprising one or more of alumina, ceria, zirconia, silicon carbide or other, generally oxidic, material. In and/or carried on the support, in one or more layers, is the chemically active and/or catalytic material. The gas-impermeability of the honeycomb walls may be inherent or may be provided by using filter-grade honeycomb monolith and blinding its pores by application of a washcoat.

In an oxidation catalyst the active material can comprise e.g. a platinum group metal (PGM), especially platinum and/or palladium, optionally with other PGMs, e.g. rhodium, and other catalyst or reaction promoting components. The exact composition and structure of the oxidation catalyst can vary according to the requirements of the application. A low temperature light-off formulation is generally preferred.

The structural material of the filter honeycomb may be selected from the same range of materials as is available for catalyst honeycombs. When the filter honeycomb is ceramic, it may be the product of shaping (e.g. by extrusion) a composition containing sufficient fugitive material to leave on removal e.g. by calcination, a material of the required porosity. Honeycomb monolith, whether ceramic or metal, may be the product of moulding and sintering an, optionally foamed, powder. Other filters may comprise metal mesh or wire. Filter-grade honeycomb suitably has a mean pore diameter in the range 1 to 20 x 10⁻³ inch (2.5 to 50 microns).

The filter can include an active coating such as the above-mentioned washcoat and/or a catalyst such as one or more PGM e.g. Pt/MgO, or La/Cs/V₂O₅, provided the fluid permeability of the filter, e.g. wall-flow filter, is not seriously impaired.

The NOx absorber can comprise one or more of: (a) compounds of alkali metals, alkaline earth metals, rare earth metals and transition metals capable of forming nitrates and/or nitrites of adequate stability in absorbing conditions and of evolving nitrogen oxides and/or nitrogen in regenerating conditions; or (b) adsorptive materials such as zeolites, carbons and high surface-area oxides, or mixtures of any two or more thereof.

Such a system preferably comprises a catalysed absorbent. By 'catalysed' is meant that the absorbent is intimately associated with catalytic material effective for promoting the reaction of NOx with another exhaust gas component such as oxygen, unburnt hydrocarbon or CO. Such material may be, for example, co-precipitated or coimpregnated or co-deposited with NOx absorbent or present as one or more sandwiched layers or serial zones or as fine (e.g. 10-500 microns) particles on or in a layer of absorbent or among particles of absorbent. Whether catalysed or not, the absorbent may be provided in one unit or a succession of separate units. It is typically on a honeycomb substrate, such as a single honeycomb or multiple honeycombs.

Compounds (a) may be present (before NOx absorption) as composite oxides, e.g. of alkaline earth metal and copper such as Ba-Cu-O or MnO₂-BaCUO₂, possibly with added Ce oxide, or Y-Ba-Cu-O and Y-Sr-Co-O. (For simplicity the oxides are referred to, but *in situ* hydroxides, carbonates and nitrates are present, depending on the temperature and gas composition). Whichever compounds are used, there may be present also one or more catalytic agents, such as precious metals, especially PGMs, effective to promote redox reactions between nitrogen oxides and hydrocarbons and/or CO.

The oxidation catalyst or the catalyst associated with the absorbent or following it can be any that is active and stable. Typically these catalysts comprise one or more PGMs, especially Pt, Rh, Pd and combinations thereof, on a high-surface area washcoat on a honeycomb structure. Detailed catalyst formulation is chosen according to which duty in the system the catalyst is to carry out. Suitable catalysts have been described in the prior art and are available to skilled persons.

An exhaust system according to the invention preferably includes a means to supply the fluid, including a reservoir of fluid and control means to effect the supply. Such control means may operate according to a pre-programmed sequence and/or respond to measurements of gas composition at critical stages in the exhaust treatment system or other operating conditions of the engine. A particular combination includes a NOx absorber or SCR catalyst and the control means is programmed to supply the fluid intermittently, especially in a 'spike' of duration 0:1 to 10 seconds, at intervals of 5 to 60 minutes.

According to a further aspect, the invention provides a lean-burn internal combustion engine including an exhaust system according to the present invention. Such an engine may be for example, a GDI (Gasoline Direct Injection) engine or an engine powered by CNG (Compressed Natural Gas). Most preferably, the engine is powered by a fuel of sulphur content less than 50, preferably less than 10 ppm w/w as S.

According to a further aspect, the invention provides a process for supplying a reactant substantially free of upstream reaction to a second zone of a reactor for treating an exhaust gas, which reactor being disposed in an exhaust system and comprising at least one first zone and the second zone downstream of the or each first zone, the or each first zone and optionally the second zone including a chemically active coating or a catalytically active coating, which reactant is introduced into the system upstream of the first zone, characterised in that: (a) the or each first zone includes a region which is substantially free of active coating, and the reactant is supplied to the region; or (b) means are provided substantially to prevent the exhaust gas contacting the reactant over the first zone and the reactant substantially does not react over the active coating of the first zone in the absence of the exhaust gas.

The reactant can be a non-specific reductant such as hydrocarbon, hydrogen or a dehydrogenable organic compound. Conveniently it is the fuel used by the engine. Where a non-specific reductant is used, the process preferably includes the step of absorbing NOx in a solid absorbent comprising the second zone, such as a NOx-trap, and the reactant is supplied intermittently to regenerate the absorbent.

Alternatively, the reactant is a NOx-specific reactant, especially a nitrogen hydride for example ammonia or hydrazine, and can be supplied as such or as a solution in e.g. water or as a precursor compound producing the reactant in exhaust treatment conditions, for example urea or aqueous urea solution. It appears that production of reactant from a precursor takes a finite time, thus delaying incidence of unwanted reactions.

Where a NOx-specific reactant is used, preferably the process includes a step of absorbing NOx in a solid absorbent comprising the second zone, such as a NOx-trap, and the reactant is supplied intermittently to regenerate the absorbent via a region substantially free of active coating of the or each first zone. Alternatively, the second zone comprises an SCR catalyst and the reactant is supplied continuously via a region substantially free of active coating of the or each first zone.

In each of the above mentioned preferred processes, the exhaust gas passes through at least one upstream first zone, particularly including an oxidation catalyst optionally followed by a soot filter.

In order that the invention may be more fully understood, embodiments thereof will now be described by way of illustration only and with reference to the accompanying drawings, in which:
Figure 1 is a part cross-section of a diesel engine exhaust treatment reactor including two catalyst beds, a soot filter and a NOx absorber;
Figure 2 shows a detail of the reactor in Figure 1 having an alternative reactant supply means; and
Figure 3 is a part-cross section of an alternative embodiment of the reactor according to the invention.

In each of the accompanying Figures the reactor body 10 is formed with an inlet port 12 connectable to the exhaust outlet of a diesel engine, and with a reactant supply means including a feed duct 14.

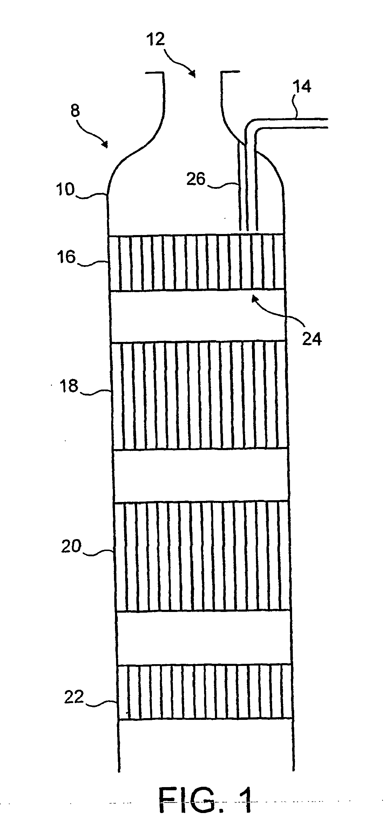

Referring to Figure 1, a reactor 8 for treating diesel exhaust gas comprises a reactor body 10 including three or optionally four reaction zones, each supported on a cordierite honeycomb. Of these, zone 16 comprises an oxidation catalyst having, except in a segmental or axial region described below, an alumina washcoat supporting platinum for promoting oxidation of *inter alia* NO in an exhaust gas to NO₂. Zone 18 is a wall-flow filter for collecting soot from the diesel exhaust gas. Zone 18 can be catalysed if desired e.g. with a base metal catalyst or La/Cs/V₂O₅, but in the embodiment illustrated no catalyst is present. [Zones 16 and 18 comprise the operative unit of Johnson Matthey's CRT™ system mentioned above]. Zone 20 comprises a regenerable NOx absorbent or a catalyst for SCR (selective catalytic reduction of NOx). Optional zone 22, comprises a two-way catalyst i.e. a diesel oxidation catalyst for oxidising CO and reducing HC. Downstrearn of zone 22 is a tail-pipe of the exhaust system (not shown).

Depending on the nature of zone 20, the reactor shown in Figure 1 is used in one of two ways:
(i) when at least zones 16, 18 and 20 are present and zone 20 is a NOx absorber, absorber 20 gradually absorbs NOx from the exhaust gas leaving 18. When absorption has reached a pre-determined level, regenerating reactant, e.g. hydrocarbon fuel, is injected through duct 14 for a pre-determined time, typically from a few seconds to a few minutes. This reactant passes through an inactive region 24 of zone 16 and undergoes little if any chemical reaction. It is not critical to prevent mixing of the reactant with the exhaust gas flow, but a deflector 26 can be provided to limit such mixing. The reactant mixes with the exhaust gas flow in the space between 16 and 18, optionally with the aid of mixing vanes (not shown), and passes through the filter zone 18 with little if any reaction, since the filter is not catalysed. The reactant then reacts with the NOx absorbed on absorber 20, thus regenerating it. If absorber 20 is catalysed, the catalyst promotes at least some reduction of the NOx by the reactant to give N₂. If a more complete reaction is to be made certain, or if the exhaust gas contains HC and/or CO, the optional two-way catalyst of zone 22 is provided for promoting the reaction of these species to equilibrium; and
(ii) when at least zones 16 and 20 are present and zone 20 contains a SCR catalyst, the oxidation catalyst of zone 16 promotes oxidation of NO in the exhaust gas to NO₂ to an extent favouring reaction of NOx with ammonia on the SCR catalyst. The reactant fed via feed 14 is ammonia or a source of ammonia and may be used intermittently or continuously. The reactant passes through inactive region 24 and undergoes little if any unwanted reaction before reaching the SCR catalyst at 20. In this embodiment, filter zone 18 and 2-way catalyst 22 are optional.

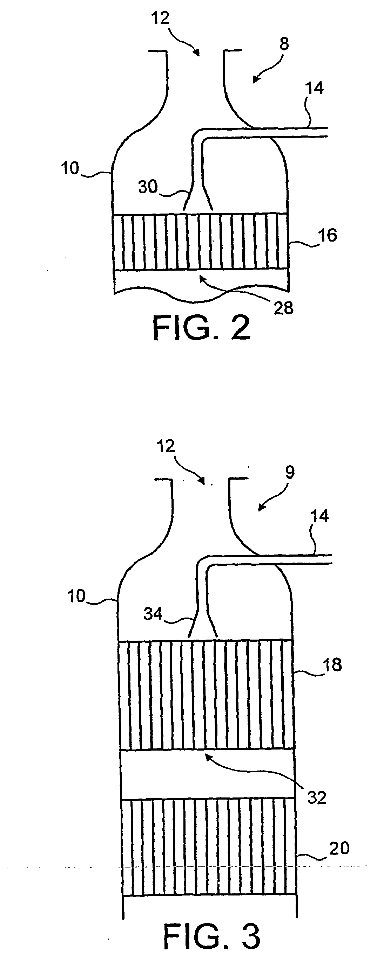

Figure 2 shows a detail of reactor 8 including an alternative reactant supply means, wherein the fluid fed at 14 is directed to an axial region 28 of the catalyst of zone 16 by way of spout 30, which is positioned substantially to limit access of the exhaust gas to that region, thus preventing unwanted mixing and reactions of the reactant with components of the exhaust gas over region 28. Region 28 may be catalysed or catalyst-free. The remainder of the reactor and its use is as explained for Figure 1 above.

Figure 3 shows a reactor 9, wherein zones 16 and 18 of the reactor 8, described above are in effect combined by supporting a catalyst on a filter. As a result, the filter is capable of catalysing the reaction of NOx in the gas with ammonia, which undesirably would remove NO₂ needed to combust soot collected on the filter, according to the process described in EP-A-0341832, as well as removing some of the ammonia needed to regenerate the NOx absorber in zone 20. In order to prevent this, ammonia is fed to axial region 32 by way of spout 34, which is positioned to limit access of the exhaust gas to that region. Region 32 may be catalysed or catalyst-free.

## Claims

1. A reactor (8) for treating an exhaust gas, which reactor (8) comprising at least one first zone (16, 18) and a second zone (20) downstream of the or each first zone (16, 18), the or each first zone (16, 18) and optionally the second zone including a chemically active coating or a catalytically active coating, **characterised in that** the or each first zone (16, 18) includes a region (24) substantially free of active coating, whereby a reactant flowing over the region (24) can pass thereover substantially without reacting so that the reactant can reach the second zone (20).

2. An exhaust system comprising a reactor (8) according to claim 1 and means for supplying a reactant to the reactor (8), the arrangement being such that a majority of the reactant is fed to the region (24).

3. An exhaust system according to claim 2, wherein the supply means is immediately upstream of the region (24) and is axially aligned therewith.

4. An exhaust system comprising a reactor (8) for treating an exhaust gas, which reactor (8) comprising at least one first zone (16, 18) and a second zone (20) downstream of the or each first zone(16, 18), the or each first zone (16, 18) and optionally the second zone (20) including a chemically active coating or a catalytically active coating and means for supplying a reactant to the exhaust system upstream of the or each first zone (16, 18), the arrangement being such that the supply means substantially prevents the exhaust gas from contacting the reactant over a region (24) of the or each first zone (16, 18) whereby a reactant introduced into the region (24) via the supply means can pass through the zone substantially unreacted to reach the second zone (20).

5. A reactor (8) according to claim 1 or an exhaust system according to claim 4, wherein the second zone (20) includes a chemically active or catalytically active coating.

6. A reactor (8) according to claim 1 or an exhaust system according to claim 4 or 5, wherein the or each first zone (16, 18) and/or the second zone (20) comprises a filter.

7. A reactor (8) according to claim 1 or an exhaust system according to claim 4 or 5, wherein the or each first zone (16, 18) and/or the second zone (20) comprises a through-flow honeycomb monolith.

8. A reactor (8) according to claim 1 or an exhaust system according to claim 4, 5, 6, or 7, wherein the at least one first zone (16, 18) comprises an oxidation catalyst and a downstream soot filter.

9. A reactor (8) according to claim 1 or an exhaust system according to any of claims 4 to 8, wherein the second zone (20) comprises a NOx absorber or a catalyst for selective catalytic reduction of NOx using a nitrogen hydride, preferably ammonia or hydrazine, as reactant.

10. An exhaust system according to any of claims 2 to 9, further comprising a reservoir for the reactant and control means to effect supply of the reactant to the supply means.

11. A lean-burn internal combustion engine including an exhaust system according to any of claims 2 to 10.

12. A diesel engine, preferably a heavy-duty diesel engine, according to claim 11.

13. A process for supplying a reactant substantially free of upstream reaction to a second zone (20) of a reactor (8) for treating an exhaust gas, which reactor (8) being disposed in an exhaust system and comprising at least one first zone (16, 18) and the second zone (20) downstream of the or each first zone (16,18), the or each first zone (16, 18) and optionally the second zone (20) including a chemically active coating or a catalytically active coating, which reactant is introduced into the system upstream of the first zone (16, 18), **characterised in that**: (a) the or each first zone (16, 18) includes a region (24) which is substantially free of active coating, and the reactant is supplied to the region(24); or (b) means are provided substantially to prevent the exhaust gas contacting the reactant over the first zone (16, 18) and the reactant substantially does not react over the active coating of the first zone (16, 18) in the absence of the exhaust gas.

14. A process according to claim 13, wherein the reactant comprises a hydrocarbon, hydrogen, a dehydrogenable organic compound or a nitrogen hydride, preferably ammonia or hydrazine.

15. A process according to claim 13, wherein the second zone (20) includes a NOx absorber and the reactant is fed thereto intermittently, preferably in a 'spike' of duration 0.1 to 10 seconds, at intervals of 5 to 60 minutes.

16. A process according to claim 13, wherein the second zone (20) is a catalyst for selective catalytic reduction of NOx and the reactant is a nitrogen hydride, preferably ammonia or hydrazine, and is fed continuously.

17. A process according to any of claims 13 to 16, wherein the exhaust gas is the product of an engine fuelled with a fuel, preferably diesel fuel, including less than 50 ppm w/w as S.

## Revendications

1. Réacteur (8) pour traiter un gaz d'échappement, lequel réacteur (8) comprend au moins un première zone (16, 18) et une seconde zone (20) en aval de la ou chaque première zone (16, 18), la ou chaque première zone (16, 18) et facultativement la seconde zone comprenant un revêtement actif chimiquement ou un revêtement actif de façon catalytique, **caractérisé en ce que** la ou chaque première zone (16, 18) comprend une région (24) sensiblement dépourvue de revêtement actif, moyennant quoi un réactif s'écoulant par-dessus la région (24) peut passer par-dessus celle-ci sensiblement sans réagir de sorte que le réactif peut atteindre la seconde zone (20).

2. Système d'échappement comprenant un réacteur (8) selon la revendication 1 et des moyens pour fournir un réactif au réacteur (8), l'agencement étant tel qu'une majorité du réactif est fournie à la région (24).

3. Système d'échappement selon la revendication 2, dans lequel les moyens d'alimentation sont immédiatement en amont de la région (24) et sont alignés de façon axiale avec celle-ci.

4. Système d'échappement comprenant un réacteur (8) pour traiter un gaz d'échappement, lequel réacteur (8) comprenant au moins une première zone (16, 18) et une seconde zone (20) en aval de la ou chaque première zone(16, 18), la ou chaque première zone (16, 18) et facultativement la seconde zone (20) comprenant un revêtement actif chimiquement ou un revêtement actif de façon catalytique et des moyens pour fournir un réactif au système d'échappement en amont de la ou chaque première zone (16, 18), l'agencement étant tel que les moyens d'alimentation empêchent sensiblement le gaz d'échappement d'entrer en contact avec le réactif sur une région (24) de la ou chaque première zone (16, 18) moyennant quoi un réactif introduit dans la région (24) par l'intermédiaire des moyens d'alimentation peut passer à travers la zone sans avoir sensiblement réagi pour atteindre la seconde zone (20).

5. Réacteur (8) selon la revendication 1 ou système d'échappement selon la revendication 4, dans lequel la seconde zone (20) comprend un revêtement actif chimiquement ou de façon catalytique.

6. Réacteur (8) selon la revendication 1 ou système d'échappement selon la revendication 4 ou 5, dans lequel la ou chaque première zone (16, 18) et/ou la seconde zone (20) comprennent un filtre.

7. Réacteur (8) selon la revendication 1 ou système d'échappement selon la revendication 4 ou 5, dans lequel la ou chaque première zone (16, 18) et/ou la seconde zone (70) comprennent un monolithe d'écoulement en nid d'abeille.

8. Réacteur (8) selon la revendication 1 ou système d'échappement selon la revendication. 4, 5, 6, ou 7, dans lequel l'au moins une première zone (16, 18) comprend un catalyseur d'oxydation et un filtre de suies en aval.

9. Réacteur (8) selon la revendication 1 ou système d'échappement selon l'une quelconque des revendications 4 à 8, dans lequel la seconde zone (20) comprend un absorbeur de NOx ou un catalyseur pour une réduction catalytique sélective de NOx à l'aide d'un hydrure d'azote, de préférence de l'ammoniac ou de l'hydrazine, en tant que réactif.

10. Système d'échappement selon l'une quelconque des revendications 2 à 9, comprenant en outre un réservoir pour le réactif et des moyens de commande pour effectuer l'alimentation des moyens d'alimentation en réactif.

11. Moteur à combustion interne à mélange pauvre comprenant un système d'échappement selon l'une quelconque des revendications 2 à 10.

12. Moteur diesel, de préférence un moteur diesel de grosse cylindrée, selon la revendication 11.

13. Procédé pour fournir un réactif sensiblement dépourvu de réaction en amont à une seconde zone (20) d'un réacteur (8) pour traiter un gaz d'échappement, lequel réacteur (8) est disposé dans un système d'échappement et comprend au moins une première zone (16, 18) et une seconde zone (20) en aval de la ou chaque première zone (16, 18), la ou chaque première zone (16, 18) et facultativement la seconde zone (20) comprenant un revêtement actif chimiquement ou un revêtement actif de façon catalytique, lequel réactif est introduit dans le système en amont de la première zone (16, 18), **caractérisé en ce que** : (a) la ou chaque première zone (16, 18) comprend une région (24) qui est sensiblement dépourvue de revêtement actif, et le réactif est fourni à la région (24) ; ou (b) des moyens sont fournis pour empêcher sensiblement le gaz d'échappement d'entrer en contact avec le réactif par-dessus la première zone (16, 18) et le réactif ne réagit sensiblement pas par-dessus le revêtement actif de la première zone (16, 18) en l'absence du gaz d'échappement.

14. Procédé selon la revendication 13, dans lequel le réactif comprend un hydrocarbure, de l'hydrogène, un composé organique pouvant être déshydrogéné ou un hydrure d'azote, de préférence de l'ammoniac ou de l'hydrazine.

15. Procédé selon la revendication 13, dans lequel la seconde zone (20) comprend un absorbeur de NOx et le réactif est fourni à celle-ci en intermittence, de préférence dans une « pointe » de durée de 0,1 à 10 secondes, à des intervalles de 5 à 60 minutes.

16. Procédé selon la revendication 13, dans lequel la seconde zone (20) est un catalyseur pour une réduction catalytique sélective de NOx et le réactif est un hydrure d'azote, de préférence de l'ammoniac ou de l'hydrazine, et est fourni en continu.

17. Procédé selon l'une quelconque des revendications 13 à 16, dans lequel le gaz d'échappement est le produit d'un moteur alimenté en carburant, de préférence du carburant diesel, comprenant moins de 50 ppm M/M de S.

## Patentansprüche

1. Reaktor (8) zur Behandlung von Abgas, wobei der Reaktor (8) mindestens eine erste Zone (16, 18) und eine zweite Zone (20) nachgeschaltet zu der oder jeder ersten Zone (16, 18) umfasst, wobei die oder jede erste Zone (16, 18) und gegebenenfalls die zweite Zone eine chemisch wirksame Beschichtung oder eine katalytisch wirksame Beschichtung einschließt, **dadurch gekennzeichnet, dass** die oder jede erste Zone (16, 18) einen Bereich (24) einschließt, der im Wesentlichen frei ist von einer wirksamen Beschichtung, wobei ein Reaktant, der über den Bereich (24) strömt, im Wesentlichen ohne zu reagieren darüber strömen kann so dass der Reaktant die zweite Zone (20) erreichen kann.

2. Abgassystem, umfassend einen Reaktor (8) gemäß Anspruch 1 und eine Einrichtung zur Zufuhr eines Reaktanten zu dem Reaktor (8), wobei die Anordnung so ist, dass ein Großteil des Reaktanten dem Bereich (24) zugeführt wird.

3. Abgassystem nach Anspruch 2, wobei die Zufuhreinrichtung unmittelbar dem Bereich (24) vorgeschaltet ist und dazu axial fluchtet.

4. Abgassystem, umfassend einen Reaktor (8) zur Behandlung von Abgas, wobei der Reaktor (8) mindestens eine erste Zone (16, 18) und eine zweite Zone (20) nachgeschaltet zu der oder jeder ersten Zone (16, 18) umfasst, wobei die oder jede erste Zone (16, 18) und gegebenenfalls die zweite Zone (20) eine chemisch wirksame Beschichtung oder eine katalytisch wirksame Beschichtung und eine Einrichtung zur Zufuhr eines Reaktanten zu dem Abgassystem vorgeschaltet zu der oder jeder ersten Zone (16, 18) einschließt wobei die Anordnung so ist, dass die Zufuhreinrichtung das Abgas im Wesentlichen davon abhält, den Reaktanten über einem Bereich (24) der oder jeder ersten Zone (16, 18) zu kontaktieren, wobei ein Reaktant, der über die Zufuhreinrichtung in den Bereich (24) eingebracht ist im Wesentlichen nicht umgesetzt durch die Zone strömen kann, um die zweite Zone (20) zu erreichen.

5. Reaktor (8) gemäß Anspruch 1 oder Abgassystem gemäß Anspruch 4, wobei die zweite Zone (20) eine chemisch wirksame oder katalytisch wirksame Beschichtung einschließt.

6. Reaktor (8) gemäß Anspruch 1 oder Abgassystem gemäß Anspruch 4 oder 5, wobei die oder jede erste Zone (16, 18) und/oder die zweite Zone (20) einen Filter umfasst.

7. Reaktor (8) gemäß Anspruch 1 oder Abgassystem gemäß Anspruch 4 oder 5, wobei die oder jede erste Zone (16, 18) und/oder die zweite Zone (20) einen Durchströmungsblenenwabenmonolith umfasst.

8. Reaktor (8) gemäß Anspruch 1 oder Abgassystem gemäß Anspruch 4, 5, 6 oder 7, wobei die mindestens eine erste Zone (16, 18) einen Oxidationskatalysator und einen nachgeschalteten Rußfllter umfasst.

9. Reaktor (8) gemäß Anspruch 1 oder Abgassystem gemäß einem der Ansprüche 4 bis 8, wobei die zweite Zone (20) einen NOₓ-Absorber oder einen Katalysator für eine selektive katalytische Reaktion von NOₓ unter Verwendung eines Stickstoffhydrids, vorzugsweise Ammoniak oder Hydrazin, als Reaktant umfasst.

10. Abgassystem gemäß einem der Ansprüche 2 bis 9, das ferner einen Vorratsbehälter für den Reaktanten und eine Kontrolleinrichtung umfasst, um die Zufuhr des Reaktanten zu der Zufuhreinrichtung zu bewirken.

11. Magerverbrennungsmotor, der ein Abgassystem gemäß einem der Ansprüche 2 bis 10 einschließt.

12. Dieselmotor, vorzugsweise ein Hochleistungsdieselmotor, gemäß Anspruch 11.

13. Verfahren zur Zufuhr eines Reaktanten, der im Wesentlichen frei ist von einer vorgeschalteten Umsetzung, zu einer zweiten Zone (20) eines Reaktors (8) zur Behandlung eines Abgases, wobei der Reaktor (8) in einem Abgassystem angeordnet ist und mindestens eine erste Zone (16, 18) und die zweite Zone (20) nachgeschaltet zu der oder jeder ersten Zone (16, 18) umfasst, wobei die oder Jede erste Zone (16, 18) und gegebenenfalls die zweite Zone (20) eine chemisch wirksame Beschichtung oder eine katalytisch wirksame Beschichtung einschließt wobei der Reaktant vorgeschaltet zu der ersten Zone (16, 18) in das System eingebracht wird, **dadurch gekennzeichnet dass** (a) die oder jede erste Zone (16, 18) einen Bereich einschließt (24), der im Wesentlichen frei ist von einer wirksamen Beschichtung, und der Reaktant dem Bereich (24) zugeführt wird; oder (b) Einrichtungen vorgesehen sind, die das Abgas im Wesentlichen davon abhalten den Reaktanten über der ersten Zone (16,18) zu kontaktieren, und der Reaktant über der wirksamen Beschichtung der ersten Zone (16, 18) in Abwesenheit des Abgases im Wesentlichen nicht reagiert.

14. Verfahren gemäß Anspruch 13, wobei der Reaktant einen Kohlenwasserstoff, Wasserstoff, eine dehydrierbare organische Verbindung oder ein Stickstoffhydrid, vorzugsweise Ammoniak oder Hydrazin, umfasst.

15. Verfahren gemäß Anspruch 13, wobei die zweite Zone (20) einen NOₓ-Absorber einschließt, und der Reaktant dazu intermittlerend zugeführt wird, vorzugsweise in einer "Spitze" einer Dauer von 0,1 bis 10 Sekunden, in Intervallen von 5 bis 60 Minuten.

16. Verfahren gemäß Anspruch 13, wobei die zweite Zone (20) für einen Katalysator für eine selektive katalytische Reaktion von NOₓ steht, und der Reaktant für ein Stickstoffhydrid, vorzugsweise Ammoniak oder Hydrazin, steht und kontinuierlich zugeführt wird.

17. Verfahren gemäß einem der Ansprüche 13 bis 16, wobei das Abgas das Produkt eines Motors ist, der mit einem Treibstoff betrieben wird, vorzugsweise Dieseltreibstoff, der wenlger als 50 ppm Gewichtsanteil S enthält.
